(19) Europäisches Patentamt
European Patent Office
Office européen des brevets

(11) **EP 2 583 847 B1**

(12) **EUROPÄISCHE PATENTSCHRIFT**

(45) Veröffentlichungstag und Bekanntmachung des Hinweises auf die Patenterteilung:
**24.12.2014 Patentblatt 2014/52**

(51) Int Cl.:
***B60J 3/04*** *(2006.01)*

(21) Anmeldenummer: **12188703.8**

(22) Anmeldetag: **16.10.2012**

(54) **Vorrichtung und Verfahren zur Reduzierung der Blendwirkung**

Device and method for reducing glare

Dispositif et procédé de réduction d'éblouissement

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.10.2011 DE 102011084730**

(43) Veröffentlichungstag der Anmeldung:
**24.04.2013 Patentblatt 2013/17**

(73) Patentinhaber: **Signum Bildtechnik GmbH 80686 München (DE)**

(72) Erfinder: **Aiteanu, Dorin 82335 Berg (DE)**

(74) Vertreter: **MERH-IP Matias Erny Reichl Hoffmann Paul-Heyse-Strasse 29 80336 München (DE)**

(56) Entgegenhaltungen:
**WO-A1-99/62732     DE-A1-102010 006 293 US-B1- 7 970 172**

Printed by Jouve, 75001 PARIS (FR)

**Beschreibung**

Die vorliegende Erfindung betrifft eine Vorrichtung und ein Vefahren zur Reduzierung der Blendwirkung durch äußere Lichtquellen beim Steuern eines Verkehrsmittels.

Zur Verhinderung des Lichteinfalles durch eine transparente Scheibe in die Augen von Personen, die ein Verkehrsmittel (z.B. ein Personenkraftfahrzeug (PKW) oder ein Lastkraftfahrzeug (LKW) führen oder benutzen oder die Anlagen mit Blendquellen bedienen, gibt es heute einige Einrichtungen wie z. B. Sonnenblenden, Sonnenschutzrollos, dunkle Klebefolien für durchsichtige Scheiben, elektrisch angesteuerte verdunkelbare Rückspiegel, getönte Scheiben, Blendklappen, Sonnenbrillen, und Schweisserbrillen.

Alle Einrichtungen haben spezifische Nachteile, wie z. B. eine unveränderbare konstante Lichtdämpfung, eine komplette Abdunkelung des gesamten Sichtbereiches einer transparenten Scheibe durch Einfärbung oder Tönung, oder die vollständige optische Ausblendung durch das Abblendmittel (z.B. einer Sonnenbrille, die eine Verdunklung auch an ungewollten Bereichen des Sichtbereichs bewirkt).

Blendsituationen können für einen Benutzer lästig sein, sie können jedoch auch zu gefährlichen Verkehrssituationen führen. Beispielsweise kann ein Fahrer im PKW von der tiefstehenden Sonne oder durch nächtlichen Gegenverkehr geblendet werden, was zu einer plötzlichen Verminderung der Sehfähigkeit führt. Typischerweise reagiert der Fahrer auf eine solche Situation mit hektischen Bewegungen zum Umschwenken von Sonnenblenden oder mit dem Schließen bzw. Abwenden der Augen, was zu gefährlichen Verkehrssituationen führen kann. Andererseits können die oben genannten Abblendvorrichtungen zu signifikanten Einschränkungen der Sichtfähigkeiten führen, weil sie den Sichtbereich erheblich einschränken.

Das vorliegende Dokument adressiert die o.g. Nachteile und beschreibt Systeme und Verfahren zur Vermeidung der Blendwirkung durch starke äußere Lichtquellen und zur Erhöhung des Sehvermögens des Fahrers eines Verkehrsmittels (z.B. eines Kraftfahrzeugs oder eines Zugs). Die beschriebenen Systeme und Verfahren bedienen sich der Bildanalyse des Augenbereichs zur Ermittlung einer geeigneten Schattenposition, sowie der Steuerung eines selektiv abdunkelbaren Panels auf der Frontscheibe des Verkehrsmittels.

Die beschriebenen Systeme sind in der Lage, entsprechende Bereiche der Windschutzscheibe des Verkehrsmittels in Abhängigkeit von externen Lichtquellen in beliebigen Entfernungen und Positionen unterschiedlich stark abzudunkeln, so dass auf die Augen des Fahrers nur ein verminderter Teil des einfallenden Lichtes trifft. Besondere Anwendungsfälle sind Fahrten "gegen die Sonne" in der Dämmerung oder bei Sonnenuntergang/Sonnenaufgang, wenn die tiefstehende Sonne den Fahrer blendet. Eine weitere Anwendungssituation für die beschriebenen Vorrichtungen sind Nachtfahrten, wenn ein Fahrer durch Fernlicht (oder falsch eingestelltes Abblendlicht) der entgegenkommenden Fahrzeuge geblendet wird. In solchen Blendungs-Fällen suchen die beschriebenen Systeme auf Basis einer elektronisch-optischen Rückkopplungsstruktur den Bereich/die Bereiche auf der Windschutzscheibe zwischen den Augen des Fahrers und der abzudunkelnden externen Lichtquellen, sodass der Bereich/die Bereiche selektiv abgedunkelt werden können, um eine Blendsituation zu vermeiden bzw. zu reduzieren. Dabei wird typischerweise durch den Grad der Abdunkelung sichergestellt, dass die blendende Lichtquelle (z. B. ein Scheinwerfer) noch abgeschwächt sichtbar ist, während die restliche Fläche der Windschutzscheibe vollständig sichtdurchlässig bleibt. Das Resultat der selektiven Abdunkelung ist nicht nur der Schutz des Fahrers vor dem Blenden, sondern auch eine natürliche Erhöhung des Sehvermögens (durch die Vermeidung der Pupillenkonstriktion). Damit besitzt der Fahrer die Möglichkeit, die Umgebung vor dem Fahrzeug durch die nicht abgedunkelten Bereiche der Windschutzscheibe besser wahrzunehmen.

WO99/62732A beschreibt eine Blendschutzeinrichtung für ein Kraftfahrzeug mit einer abdunkelbaren Filterscheibe, die über eine Steuereinheit ansteuerbar ist. Die Steuereinheit ist mit Sensoren zum Erfassen eines Blendobjektes, und mit einer Kamera zum Erfassen der Augenposition eines Kraftfahrzeuginsassen verbunden.

Gemäß einem Aspekt dieses Dokumentes wird eine Vorrichtung zur Reduzierung der Blendwirkung einer Lichtquelle auf den Augen eines Führers eines Fahrzeugs beschrieben. Bei dem Fahrzeug kann es sich z.B. um ein Kraftfahrzeug, ein Lastkraftwagen, ein Auto, einen Zug, oder ein Schiff handeln. Bei der Lichtquelle handelt es sich z.B. um die tiefstehende Sonne oder um Scheinwerferlicht von entgegenkommenden Fahrzeugen. Es sei darauf hingewiesen, dass die Vorrichtung dazu eingerichtet sein kann, eine Vielzahl von blendenden Lichtquellen (z.B. eine Vielzahl von blendenden Scheinwerfern) abzudunkeln.

Die Vorrichtung umfasst typischerweise ein abdunkelbares Panel, welches eine Vielzahl von einzeln abdunkelbaren Zellen umfasst. Die einzelnen Zellen können in einer Matrixform angeordnet sein, so dass eine Matrix von N Zeilen und M Spalten entsteht. Das abdunkelbare Panel kann z.B. eine LCD Schicht umfassen, welche bei Anlegen einer elektrischen Spannung abdunkelt. Insbesondere kann jeder der Vielzahl von Zellen eine LCD Schicht umfassen, so dass jede Zelle separat durch Anlegen einer Spannung abgedunkelt werden kann. Typischerweise ist eine Transparenz des abdunkelbaren Panels (d.h. der einzelnen Zellen) variierbar. Z.B. kann durch Variieren der angelegten Spannung der Grad der Transparenz bzw. der Grad der Abdunkelung der einzelnen Zellen variiert werden. Das Panel ist i.A. zwischen einer Position für den Fahrzeugführer (z.B. einem Fahrersitz und der Lichtquelle angeordnet. Mit anderen Worten, das Panel ist typischerweise innerhalb des Lichtstrahls der Lichtquelle vor einer Position für den Fahrzeugführer angeordnet, um so den Lichtstrahl abdunkeln zu können, und um so eine Blendwirkung des Fahrzeugführers durch die Lichtquelle zu reduzieren. Typischerweise ist das abdunkelbare Panel an einer Frontscheibe (z.B. einer Windschutzscheibe) des Fahrzeugs angebracht.

Die Vorrichtung umfasst einen optischen Sensor (z.B. eine Kamera), der eingerichtet ist, ein Bild der Augen des Fahrzeugführers zu erfassen. Mit anderen Worten, der optische Sensor ist auf die Position des Fahrzeugführers gerichtet, um das Gesicht und insbesondere die Augen des Fahrzeugführers erfassen zu können. In einem Ausführungsbeispiel ist der optische Sensor in einem horizontalen Winkel von 20° bis 60° zur Hauptachse des Fahrzeugs auf den Fahrer gerichtet. Z.B. könnte der optische Sensor an dem inneren Rückspiegel innerhalb der Fahrerkabine des Fahrzeugs angebracht werden.

Die Vorrichtung umfasst weiter eine Berechnungseinheit, welche ausgebildet ist, auf Basis des vom optischen Sensor erfassten Bildes die Vielzahl der Zellen des abdunkelbaren Panels derart zu steuern, dass ein Schatten auf die Augen des Fahrzeugführers geworfen wird. Insbesondere kann die Berechnungseinheit ausgebildet sein, eine oder mehrere Schatten-Zellen aus der Vielzahl von Zellen zu ermitteln, die dazu führen, dass bei Abdunkelung der ein oder mehreren Schatten-Zellen bei Beleuchtung durch die Lichtquelle ein Schatten auf die Augen des Fahrzeugführers geworfen wird. Gleichzeitig werden die ein oder mehreren Schatten-Zellen so ermittelt, dass sie nur die Zellen umfassen, die zur Generierung des Schattens auf den Augen des Fahrzeugführers erforderlich sind. Alle anderen Zellen des Panels sollten transparent bleiben, um die Sicht des Fahrzeugführers nicht unnötig zu behindern. Zur Ermittlung der geeigneten Schatten-Zellen kann die Berechnungseinheit ausgebildet sein, die in diesem Dokument beschriebenen Verfahren zur Reduzierung der Blendwirkung durch eine Lichtquelle auszuführen. Insbesondere kann die Berechnungseinheit ausgebildet sein, die unten beschriebenen Suchphasen und Abdunkelungsphasen unter Verwendung des optischen Sensors und des abdunkelbaren Panels auszuführen.

Gemäß einem weiteren Aspekt dieses Dokumentes wird ein Verfahren zur Reduzierung der Blendwirkung einer Lichtquelle auf die Augen eines Führers eines Fahrzeugs beschrieben. Das Verfahren umfasst das Abdunkeln eines Bereichs (z.B. von ein oder mehreren Zellen) des abdunkelbaren Panels. Wie oben dargelegt, ist das Panel typischerweise zwischen den Augen des Fahrzeugführers und der Lichtquelle (z.B. an einer Frontscheibe des Fahrzeugs) positioniert. Desweiteren umfasst das Verfahren das Erfassen eines Bildes des Fahrzeugführers (z.B. anhand eines optischen Sensors, welcher auf den Fahrzeugführer gerichtet ist). Insbesondere kann ein Bild der Augen des Fahrzeugführers erfasst werden. Schließlich wird auf Basis des Bildes ermittelt, ob aufgrund des abgedunkelten Panels ein Schatten auf die Augen des Fahrzeugführers geworfen wird. Diese Schritte des Verfahrens können für verschiedene Bereiche des Panels iteriert werden, um so ein oder mehrere Unterbereiche des Panels zu ermittelt, die im abgedunkelten Zustand einen Schatten auf die Augen des Fahrzeugführers werfen.

Wie bereits oben dargelegt, kann das abdunkelbare Panel eine Zellenmatrix mit einer Vielzahl von separat abdunkelbaren Zellen umfassen, d.h. der abgedunkelte Bereich des Panels kann einer oder mehreren der Zellen entsprechen. Das Abdunkeln eines Bereichs des abdunkelbaren Panels kann dann das Abdunkeln ein oder mehrerer Zellen der Vielzahl von Zellen umfassen.

Typischerweise umfasst das Verfahren eine Suchphase. In der Suchphase werden ein oder mehrere Schatten-Zellen der Vielzahl von Zellen bestimmt. Die ein oder mehreren Schatten-Zellen haben die Eigenschaft, dass durch ihre Abdunkelung ein Schatten von der Lichtquelle (d.h. bei Beleuchtung von der Lichtquelle) auf die Augen des Fahrzeugführers geworfen wird. Das Bestimmen der ein oder mehreren Schatten-Zellen umfasst i.A. das Iterieren der Schritte Abdunkeln (eines Bereichs der Panels), Erfassen (eines Bildes mit dem teilweise abgedunkelten Panel) und Ermitteln (der Präsenz eines Schattens auf den Augen des Fahrzeugführers) für verschiedene Bereiche bzw. Zellen des Panels. Mit anderen Worten, durch Iterieren der o.g. Schritte für jede der Vielzahl von Zellen des Panels wird ermittelt, durch welche der Zellen ein Schatten auf die Augen des Fahrzeugführers geworfen wird, um so die Blendwirkung durch die Lichtquelle zu reduzieren.

Die Suche nach den ein oder mehreren Schatten-Zellen kann spezifische Suchalgorithmen verwenden, welche die Suchzeit reduzieren. Bei einem Panel von MxN Zellen benötigen diese Suchalgorithmen i.A. weniger als MxN Iterationen. Beispielsweise kann in einer Iteration ein Unterbereich von mehreren Zellen des Panels abgedunkelt werden (z.B. eine Zeile oder eine Spalte oder eine Hälfte des Panels). Der Unterbereich kann in der folgenden Iteration von dem Bestimmen von ein oder mehreren Schatten-Zellen ausgeschlossen werden, wenn ermittelt wird, dass durch den abgedunkelten Unterbereich kein Schatten (bei Beleuchtung durch die Lichtquelle) auf die Augen des Fahrzeugführers geworfen wird. Andererseits kann in der folgenden Iteration das Bestimmen von ein oder mehreren Schatten-Zellen auf den Unterbereich beschränkt werden, wenn ermittelt wird, dass ein Schatten auf die Augen des Fahrzeugführers geworfen wird.

Neben der Suchphase umfasst das Verfahren typischerweise eine Abdunkelungsphase, während dessen die ein oder mehreren Schatten-Zellen kontinuierlich abgedunkelt werden, um so die Blendwirkung der Lichtquelle auf die Augen des Fahrzeugführers zu reduzieren.

Um die ermittelten Schatten-Zellen an eine Bewegung der Lichtquelle, eine Bewegung des Fahrzeugs und/oder eine Bewegung des Fahrzeugführers relativ zum Fahrzeug kontinuierlich anzupassen, können die Suchphase (und damit die Bestimmung der Schatten-Zellen) und der Abdunkelungsphase (und damit das kontinuierliche Abdunkeln der Schatten-Zellen) zyklisch wiederholt werden. Eine geeignete Zyklusfrequenz ist z.B. 5Hz, 6Hz, 7Hz, 8Hz, 9Hz, 10Hz oder mehr. Um eine effektive Reduzierung der Blendwirkung zu erzielen, umfasst die Abdunkelungsphase typischerweise 80%, 85%, 90% oder mehr der Gesamtzeit eines Zyklus.

Die Zeit der Suchphase kann i.A. reduziert werden, wenn bei der Bestimmung der ein oder mehreren Schatten-Zellen in einem bestimmten Zyklus auf die ein oder mehreren Schatten-Zellen aus ein oder mehreren vorhergehenden Zyklen zurückgegriffen wird. Aufgrund der kontinuierlichen Bewegung der Lichtquelle, des Fahrzeugs bzw. des Fahrzeugführers können aus einer Sequenz von ein oder mehreren Schatten-Zellen aus einer Sequenz von Zyklen die ein oder mehreren Schatten-Zellen (z.B. anhand von Motion-Estimation Verfahren) prädiziert werden. Mit anderen Worten, aus den ein oder mehreren Schatten-Zellen aus den ein oder mehreren vorhergehenden Zyklen können die ein oder mehreren Schatten-Zellen für den bestimmten Zyklus prädiziert werden.

Wie bereits oben dargelegt, kann das Verfahren angepasst sein, um die Blendwirkung einer Vielzahl von Lichtquellen zu reduzieren. Insbesondere kann das Verfahren feststellen, dass die ein oder mehreren Schatten-Zellen eine Vielzahl von Schatten-Zellen umfassen, welche eine Vielzahl von Unterbereichen des Panels bilden. Mit anderen Worten, es kann festgestellt werden, dass die bestimmten Schatten-Zellen Gruppen oder Cluster bilden, wobei jeder dieser Cluster (Unterbereiche) einer korrespondierenden Lichtquelle aus einer Vielzahl von Lichtquellen zugeordnet werden kann. D.h. durch die Erkennung von Clustern, erkennt das Verfahren die Präsenz einer Vielzahl von Lichtquellen, die durch jeweils einen der Zellen-Cluster abgedunkelt werden. Das Verfahren kann dann jeden dieser Cluster (bzw. Unterbereiche) separat behandeln. Insbesondere können Bewegungen des Clusters separat ermittelt werden, so dass jeder Unterbereich (Cluster) aus einem korrespondierenden Unterbereich eines vorhergehenden Zyklus prädiziert werden kann.

Das Verfahren kann außerdem Schritte zur Erkennung einer Blendsituation umfassen. Diese Schritte können z.B. innerhalb jedes Zyklus zwischen der Suchphase und der Abdunkelungsphase ausgeführt werden. Zu diesem Zweck kann das Verfahren eine Gesamtaufnahme ermitteln, welche das Gesicht des Fahrzeugführers und eine Umgebung des Fahrzeugführers umfasst. Die Gesamtaufnahme wird typischerweise mit einem vollständig transparenten (d.h. abgeschalteten) Panel ermittelt. Aus der Gesamtaufnahme kann ein Bereich des Gesichts des Fahrzeugführers bestimmt werden. Anhand dieser Information können eine Gesamthelligkeit aus der Helligkeit der Gesamtaufnahme (z.B. die durchschnittliche Helligkeit der Gesamtaufnahme), sowie eine Gesichtshelligkeit aus der Helligkeit der Gesamtaufnahme im Bereich des Gesichts (z.B. die durchschnittliche Helligkeit im Gesichtsbereich) bestimmt werden. Schließlich kann eine Blendung des Fahrzeugführers (bzw. die Gefahr einer Blendung des Fahrzeugführers) durch die Lichtquelle auf Basis der Gesichtshelligkeit und der Gesamthelligkeit detektiert werden. Beispielhaft kann ein Verhältnis zwischen Gesichtshelligkeit und Gesamthelligkeit ermittelt werden. Eine Blendsituation wird detektiert, wenn das Verhältnis über einem vorbestimmten Schwellwert liegt.

Zur Verkürzung der Suchphase ist es üblicherweise von Vorteil, wenn ein Bild des Fahrzeugführers während der Suchphase nur im Bereich der Augen ermittelt wird. Anhand von Mustererkennungsverfahren kann aus der Gesamtaufnahme ein Bereich der Augen des Fahrzeugführers bestimmt werden. Aufgrund dieser Situation kann in einer folgenden Suchphase das Erfassen des Bildes des Fahrzeugführers auf den Bereich der Augen beschränkt werden. Aus der Gesamtaufnahme kann auch eine Augenhelligkeit bestimmt werden, z.B. als Helligkeit der Gesamtaufnahme im Bereich der Augen (z.B. als durchschnittliche Helligkeit in Augenbereich). Mit anderen Worten, es kann ein Grad der Blendung durch die Lichtquelle ermittelt werden. Folglich kann ein Grad der Abdunkelung der ein order mehreren Schatten-Zellen auf Basis der ermittelten Augenhelligkeit bestimmt werden.

Es sei darauf hingewiesen, dass die verschiedenen Verfahren und Vorrichtungen allein und in Kombination miteinander verwendet werden können. Insbesondere können alle in diesem Dokument beschriebenen Merkmale in beliebiger Weise miteinander kombiniert werden. Der Umfang der Erfindung wird dabei nur durch die anhängenden Ansprüche eingeschränkt.

Im Folgenden wird die Erfindung anhand von Beispielen mit Bezug auf die beiliegenden Figuren beschrieben, wobei

    Fig. 1 exemplarisch ein System zur Vermeidung von Blendwirkung darstellt;
    Fig. 2 exemplarisch ein abdunkelbares Panel darstellt; und
    Fig. 3 ein beispielhaftes Verfahren zur Vermeidung/Reduzierung von Blendwirkung beschreibt.

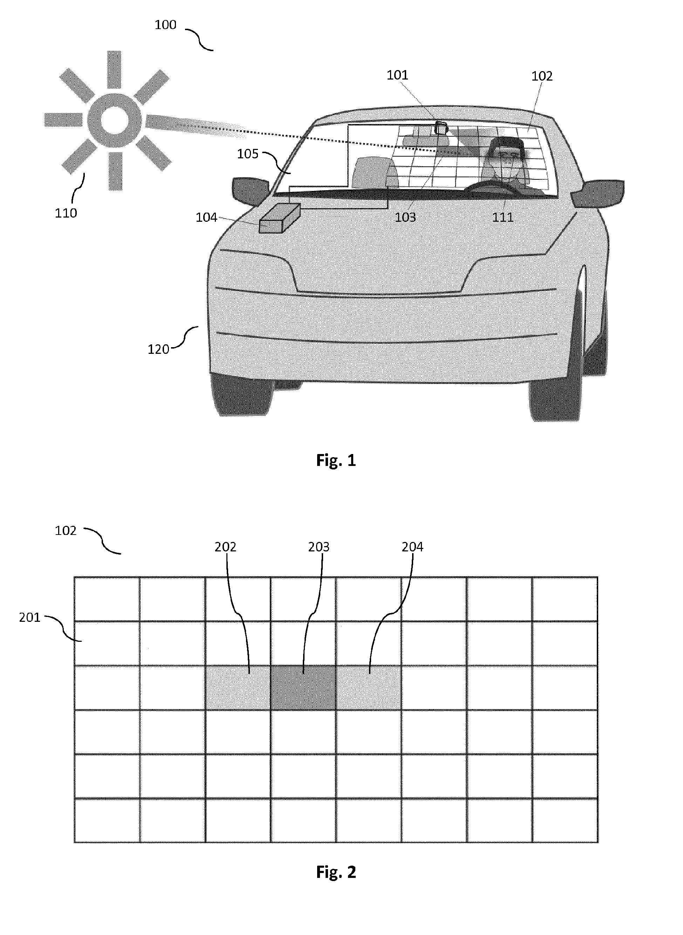

In Fig. 1 ist beispielhaft eine Vorrichtung 100 zur Reduzierung der Blendwirkung von externen Lichtquellen 110 dargestellt. Fig. 1 zeigt diese Vorrichtung 100 am Beispiel eines PKWs 120. Es ist jedoch zu beachten, dass die Vorrichtung 100 in beliebigen Fahrzeugen angewendet werden kann, bei denen ein Fahrzeugführer, z.B. durch eine Frontscheibe 105 hindurch, von ein oder mehreren Lichtquellen 110 geblendet werden kann (wie z.B. LKWs, Flugzeugen, Zügen, Motorräder, Motorrollern, Schiffen, etc.).

Die Vorrichtung 100 umfasst ein selektiv abdunkelbares Panel 102, welches befähigt ist, ein oder mehrere selektive Bereiche 103 des Sichtbereiches des Fahrzeugführers abzudunkeln. Außerdem umfasst die Vorrichtung 100 einen optischen Sensor 101 (z.B. eine Kamera), welche das Gesicht (d.h. insbesondere den Augenbereich) des Fahrzeugführers erfasst. Zu diesem Zweck ist der optische Sensor 101 vor dem Fahrzeugführer (in Blickrichtung des Fahrzeugführers) angebracht (d.h. zwischen dem Fahrzeugführer und der blendenden Lichtquelle 110).

Desweiteren umfasst die Vorrichtung 100 eine Berechnungseinheit 104, welche befähigt ist, ein Verfahren zur Reduzierung der Blendwirkung der externen Lichtquelle(n) 110 auszuführen. Zu diesem Zweck wertet die Berechnungseinheit 104 die optischen Signale (z.B. die Bilder) des optischen Sensors 101 aus, um eine Blendsituation des Fahrzeugführers festzustellen. Desweiteren steuert die Berechnungseinheit 104 das Panel 102 und den optischen Sensor 101, um in einem iterativen Prozess das Panel 102 selektiv so abzudunkeln, dass ein abdunkelnder Schatten 111 auf die Augen des Fahrzeugführers geworfen wird, wobei der abdunkelnde Schatten 111 die Blendsituation des Fahrzeugführers reduziert bzw. beseitigt. Bei mehreren Lichtquellen 110 aus verschiedenen Richtungen werden i.A. mehrere abdunkelnde Schatten 111 auf die Augen des Fahrzeugführers geworfen. Diese Vielzahl von Schatten 111 wird durch eine korrespondierende Vielzahl von abgedunkelten Bereichen 103 des Panels 102 erzeugt. Die selektive Abdunkelung des Panels 102 erfolgt derart, dass der Sichtbereich außerhalb der störenden Lichtquelle(n) 110 unbeeinträchtigt bleibt.

Dem System 100 können Methoden der optisch erweiterten Realität (Augmented Reality) unter einer neuen Perspektive zu Grunde gelegt werden: anstatt computerbasierte Projektionen in einer bestimmten Entfernung - wie üblich in der erweiterten Realität - zu positionieren, dunkelt das System 100 bestimmte Bereiche der Frontscheibe 105 (z.B. der Windschutzscheibe) durch spezielle Algorithmen ab und beobachtet im Rahmen einer Rückkopplungsstruktur die produzierten Schatten 111 auf dem Gesicht des Fahrers mittels einem optischen Sensor 101 (z.B. einer Hochgeschwindigkeitskamera oder einer Vielzahl von gerichteten Lichtsensoren um die Position der Schatten und der Kontraste im Raum, d.h. insbesondere auf dem Gesicht und/oder den Augen des Fahrzeugführers, zu ermitteln). Die Rückkopplungsstruktur, welche den optischen Sensor 101, das Panel 102 und die Bearbeitungseinheit 104 umfasst, ermöglicht es (typischerweise innerhalb weniger Millisekunden) anhand des Panels 102 unterschiedliche Abdunkelungsmuster auf der Windschutzscheibe 105 (durch sequentielle oder heuristische Abdunkelung bestimmter Bereiche/Zellen 103 des Panels 102) zu generieren und gleichzeitig anhand des optischen Sensors 101 (in Echtzeit) die Helligkeit des Augenbereichs im Gesicht des Fahrers zu ermitteln und zu analysieren. Durch geeignete Suchverfahren werden von der Berechnungseinheit 104 die Anzahl und die Positionen der abzudunkelnden Bereiche 103 für den optimalen Schutz der Augen des Fahrzeugführers berechnet.

Somit ermöglicht es die Vorrichtung 100, ohne die Position, die Richtung und die Entfernung der äußeren Lichtquelle(n) 110 im Voraus zu kennen, die Stellen 103 auf der Windschutzscheibe 105 zu ermitteln, die abzudunkeln sind, um eine optimale Abschattung der Augen zu erreichen.

Technisch basiert das System 100 auf einem einzigen optischen Sensor 101 zur Schattenanalyse, z.B. einer Hochgeschwindigkeitskamera. Als Ausgabe nutzt das System 100 eine selektiv abdunkelbare Folie 102 zur Schattengenerierung. Das System 100 ist selbstjustierend und erfordert folglich keine (kaum) Kalibrierung. Insbesondere benötigt das System 100 keine Sensoren zur Positionserfassung der äußeren Lichtquelle(n) (110). Anhand einer Hochgeschwindigkeits-Bildanalyse kann die optimale Abdunkelung in kürzester, für den Fahrer kaum wahrnehmbarer, Zeit berechnet werden.

Das beschriebene System 100 weist daher eine hohe Wirksamkeit und eine einfache Integration auf. Im Falle einer Blendsituation sind oft Gefahren oder der weitere Verlauf der Straße trotz hoher Konzentration des Autofahrers nicht (oder nur sehr spät) erkennbar. Durch das beschriebene System 100 wird es möglich, das menschliche Wahrnehmungsvermögen mit dem Ziel der Sicherheitserhöhung aller Verkehrsteilnehmer zu erhöhen. Das System 100 ist in der Lage, starke Lichteinflüsse selektiv abzudunkeln, ohne die Sicht auf andere Bereiche der Umgebung zu beeinträchtigen. Im Gegenteil: durch die Blendunterdrückung wird eine optimierte Wahrnehmung ermöglicht.

Als optischer Sensor 101 kann z.B. eine Hochgeschwindigkeitskamera verwendet werden. Solche Kameras können bei einer Auflösung von 1920 x 1080 Pixel z.B. 400 Bilder pro Sekunde (und mehr bei reduzierter Bildauflösung) erzeugen. Diese Sequenz von Bildern kann dann z.B. in Echtzeit über eine CamLink-Schnittstelle an die Berechnungseinheit 104 übertragen werden.

Der optische Sensor 101 ist auf das Gesicht (d.h. insbesondere auf den Augenbereich) des Fahrzeugführers (oder kurz des Fahrers) gerichtet. Die genaue Position des optischen Sensors 101 im Fahrzeug sollte u.a. nach ergonomischen Gesichtspunkten gewählt werden, so dass die Sicht des Fahrers durch den optischen Sensor 101 nicht beeinträchtigt wird. Vor allem sollte aber die Position des optischen Sensors 101 derart gewählt werden, dass der optische Sensor 101 den Innenraum des Fahrzeugs und insbesondere den Kopf / Augenbereich des Fahrers vollständig erfassen kann. Dabei kann auch der Bewegungsradius und/oder die unterschiedlichen Größen von unterschiedlichen Fahrern berücksichtigt werden. Schließlich sollte es die gewählte Position ermöglichen, Helligkeitskontraste auf dem Gesicht des Fahrers zuverlässig zu erfassen, um so zuverlässig Blendsituationen und die Position des Schattens 111 ermitteln zu können. Es hat sich gezeigt, dass sich mit einer Positionierung des Sensors 101 schräg seitlich zum Fahrer, z.B. in einem Winkel von 20°-60° gegenüber einer Frontallinie, die o.g. Anforderungen erreichen lassen. So könnte der Sensor 101 in einem Fahrzeug z.B. in der näheren Umgebung des inneren Rückspiegels angebracht werden, wie in Fig. 1 beispielhaft gezeigt.

Für den oben beschriebenen Rückkopplungsmechanismus zur Bestimmung der Abdunkelungsbereiche 103 des Panels 102 ist typischerweise eine hohe Bildrate (500-1000Hz) erforderlich. Die Bildrate kann z.B. durch die Verwendung von geeigneten Hochgeschwindigkeitskameras erreicht werden (welche derartige Bildraten ermöglichen). Andererseits kann die Bildrate für eine bestimmte Kamera dadurch erhöht werden, dass der ausgelesene Bildbereich der Kamera 101 auf einen bestimmten Interessensbereich (Region of Interest, ROI) eingeschränkt wird. Wie bereits oben dargelegt, ist es für die Reduzierung der Blendwirkung gemäß dem hier beschriebenen Verfahren und System typischerweise ausreichend, wenn eine Blendsituation im Augenbereich des Fahrers detektiert wird und anschließend die Erzeugung eines Schattens 111 im Augenbereich durch das selektiv abdunkelbare Panel 102 erkannt wird. Die Bildrate des Sensors 101 kann daher dadurch erhöht werden, dass der ausgelesene Bereich des Sensors 101 auf einen Unterbereich (ROI) des gesamten Erfassungsbereichs des Sensors 101 reduziert wird, wobei der gewählte Unterbereich (ROI) von dem ermittelten Augenbereich des Fahrers abhängt. Typischerweise wird der ROI durch den ermittelten Augenbereich inklusive einer definierten Umgebung (z.B. einen Rand von einer bestimmten Anzahl von Pixeln um den Augenbereich) definiert.

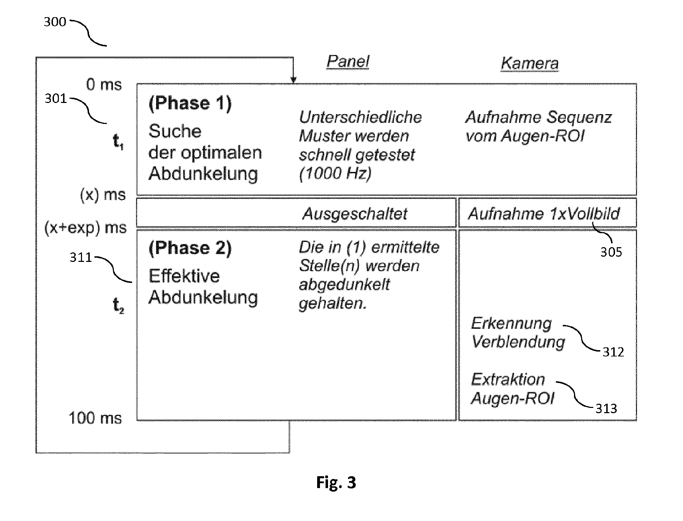

Um eine Erhöhung der Bildrate durch eine Beschränkung der Bilderfassung auf einen Unterbereich (ROI) zu ermöglichen, ist in einem Ausführungsbeispiel die Bildverarbeitung zeitlich in zwei Schritte geteilt. In einem ersten Schritt erfolgt eine Vollbildaufnahme zur Diagnose einer Blendsituation und zur Erkennung des Gesichts inklusive der Augenpositionen. In diesem Schritt wird der ROI ermittelt. Dieser erste Schritt könnte z.B. mit einer Frequenz von 10 Hz erfolgen (siehe Bezugszeichen 313 in Fig. 3). In einem zweiten Schritt wird dann die iterative Bestimmung der abzudunkelnden Stellen 103 des Panels 102 vorgenommen (siehe Bezugszeichen 301 in Fig. 3). Diese iterative Bestimmung der abzudunkelnden Stellen 103 sollte in so kurzer Zeit erfolgen, dass der Fahrer (1) den iterativen Bestimmungsprozess nicht wahrnimmt, und (2) der gewünschte Schatten 111 so schnell auf die Augen des Fahrer geworfen wird, dass keine merkliche Störung durch die anfängliche Blendsituation erfolgt. Zur Beschleunigung des iterativen Bestimmungsprozess ist eine möglichst hohe Bildrate erwünscht, die dadurch erhöht werden kann, dass die Bilderfassung im zweiten Schritt auf den ROI beschränkt wird. Durch die Beschränkung der Bilderfassung auf den ROI sind Bildraten von 1000 Hz und höher möglich, so dass der iterative Bestimmungsprozess die o.g. Anforderungen erfüllen kann.

Es ist weiter zu beachten, dass die mögliche Bildrate des optischen Sensors 101 typischerweise auch von der Beleuchtungssituation abhängt. Schlechte Beleuchtungssituationen (z.B. nachts) erfordern üblicherweise höhere Belichtungszeiten und daraus folgend eine geringere Bildrate. Eine dynamische Anpassung der Bildrate ist typischerweise nicht möglich. Aus diesem Grund kann die Berechnungseinheit 104 derart ausgestaltet sein, dass die Taktung des Auslesens des optischen Sensors 101 an die jeweils erforderlichen Belichtungszeiten des optischen Sensors 101 angepasst werden. D.h. die Taktung des Auslesens von Bildern vom optischen Sensor 101 kann an die jeweilige Lichtsituation angepasst werden. So könnten bei guten Lichtverhältnissen (z.B. am Tag) höhere Ausleseraten verwendet werden, als bei schlechten Lichtverhältnissen (z.B. bei Nacht). Die aktuellen Lichtverhältnisse könnten auf Basis der Helligkeit des im ersten Schritt ermittelten Vollbildes bestimmt werden. Desweiteren könnte eine diskrete Funktion (z.B. in Form einer Lookup-Tabelle) zur Bestimmung der Bildrate auf Basis der bestimmten Lichtverhältnisse verwendet werden.

Fig. 2 zeigt die beispielhafte Struktur eines selektiv abdunkelbaren Panels 102. Das in Fig. 2 gezeigt Panel 102 umfasst abdunkelbare Einzelzellen 201 in einer Matrixform. Jede abdunkelbare Einzelzellen 201 könnte eine LCD-Schicht umfassen, welche bei Anlegen einer elektrischen Spannung die Zelle 201 verdunkelt. Die Einzelzellen 201 sind typischerweise derart ausgestaltet, dass sie im inaktiven (transparenten) Zustand eine Transparenz von 70%, 80%, 90% oder mehr aufweisen. Im aktiven (abdunkelnden) Zustand könnte die Transparenz bis zu 1% (oder auch 0,1%) reduziert werden. Der Grad der Transparenz kann typischerweise durch die höhe der angelegten Spannung kontrolliert werden. So können unterschiedliche Abdunkelungsgrade der Zellen 201 erreicht werden, wie durch die Zellen 202, 203, 204 in Fig. 2 dargestellt.

Das in Fig. 2 dargestellte Panel 102 wird aus einer Vielzahl von Einzelzellen 201 in Form einer Matrix zusammengesetzt, wobei jede Einzelzelle 201 separat abgedunkelt werden kann. Beispielhaft könnte eine Zelle 201 des Panels 102 in der Größe 100 *x* 80 mm gebaut werden, um so den relevanten Sichtbereich auf der Windschutzscheibe 105 eines Autos 120 abzudecken. Dazu könnten 48 Zellen 201 in einer Konfiguration von 8 Spalten und 6 Zeilen verwendet werden. Es können natürlich auf andere Zellengrößen und Panelgrößen verwenden werden. Die Einzelzellen 201 können durch die Anwendung eines Stromsignals unterschiedlich abgedunkelt werden. Für die Führung des Stromsignals zu den einzelnen Zellen 201 können transparente Leitungen verwendet. Der elektrische Anschluss des Panels 102 kann seitlich an das Panel 102 angebracht werden. Die abdunkelbaren Zellen 201 des Panels 102 sind derart ausgestaltet, dass sie einen quasi sofortigen Wechsel vom transparenten zum abgedunkelten Zustand (und umgekehrt) ermöglichen. Existierende LCD-Schichten können im Bereich von 0,1ms abgedunkelt werden, so dass Zustandsänderungen mit einer Frequenz von 10.000 Hz möglich sind.

Während des iterativen Prozesses zur Bestimmung der abzudunkelnden Zellen 201 werden bestimmte Zellen 201 des Panels 102 abgedunkelt und zeitgleich wird anhand des optischen Sensors 101 ermittelt, ob ein Schatten 111 im Augenbereich (ROI) des Fahrers erzeugt wird. Um dies zu ermöglichen, ist die Berechnungseinheit 104 befähigt, das Abdunkeln einer oder mehrerer Zellen 201 (durch Anlegen einer Spannung an die jeweiligen Zellen 201) und das Ermitteln eines Bildes (durch Auslesen des optischen Sensors 101) zu synchronisieren. Wie oben dargelegt, sind mit heutigen Kameras 101 Bildraten von 1000 Hz und höher möglich und Panels 102 können mit einer Abdunkelungsrate von ca. 10.000 Hz betrieben werden. Es ist folglich bereits heute möglich mit einer Frequenz von 1000Hz (und mehr) mögliche Abdunklungsmuster auf den von diesem Muster geworfenen Schatten 111 hin zu untersuchen, um so in einem iterativen Prozess ein Abdunklungsmuster des Panels 102 (d.h. eine Panelkonfiguration) zu bestimmen, welches die Blendwirkung von Lichtquelle(n) 110 reduziert. Im Folgenden wird beispielhaft von einer Frequenz von 1000Hz ausgegangen.

Das Panel 102 umfasst typischerweise eine Steuerungseinheit, anhand derer (z.B. auf Basis kodierter Telegramme) die Zustände aller Zellen 201 (z.B. LCD Folien) auf dem Panel 102 gesteuert werden können. Die Steuereinheit kann als eine elektronische Platine implementiert werden, die mit einer entsprechenden Telegrammkodierung ein serielles Signal für eine Reihe von 48 voneinander unabhängigen Wechselstromsignalen (für die 48 Zellen 201 des Panels 102) herausgibt, die zur Ansteuerung der einzelnen Zellen 201 dienen. Während der Suche nach einem Pattern (ein Pattern beinhaltet die Werte für alle 48 Zellen 201 des Panels 102), welches einen geeigneten Schatten 111 (oder mehrere geeignete Schatten) wirft, kann eine Liste von Patterns (zusammen mit der Taktfrequenz) von der Berechnungseinheit 104 an die Steuereinheit geschickt werden, welche dann eine unterschiedliche Abdunkelungskonfiguration des Panels 102 gemäß der vorgegebenen Pattens steuert (z.B. mit einer Frequenz von 1000 Hz). Außerdem kann die Steuereinheit des Panels 102 ein Sync-Signal ausgeben, welches zur Synchronisation der Aufnahme durch die Hochgeschwindigkeitskamera 101 dient.

Es ist zu beachten, dass für die Synchronisation zwischen den einzelnen Komponenten des Systems 100 (insbesondere des Sensors 101 und des Panels 102) diverse Verzögerungen berücksichtigt werden sollten. Typischerweise gibt es eine Reihe von Prozessen und Übertragungen von Signalen, die durch die digitale Verarbeitung eine Verzögerung einführen. Diese sind unter anderem die Übertragung des seriellen Signals der Berechnungseinheit 104, die Bearbeitung des Signals mittels der Steuerungseinheit des Panels 102, die Reaktionszeit zur Abdunkelung der LCD-Zellen 201 (0,1 - 0,2 ms). Diese Verzögerungen sollten bei der Generierung des Sync-Signals für den optischen Sensor 101 berücksichtigt werden, um sicherzustellen, dass das vom Sensor 101 ermittelte Schattenbild von einem bestimmten Panel-Pattern (und nicht durch eine Mischung von zwei aufeinanderfolgenden Patterns) erzeugt wurde, d.h. das die Bilderfassung durch den Sensor 101 und die Schattenbildung durch das Panel 102 synchronisiert sind.

Fig. 3 zeigt ein beispielhaftes iteratives Verfahren 300 zur Reduzierung der Blendwirkung von externen Lichtquellen 110 anhand der Vorrichtung 100. Das Verfahren 300 umfasst zwei Phasen. In einer ersten (kurzen) Phase 301 wird ein Panel-Pattern (auch Panelkonfiguration genannt) ermittelt, welches die Blendsituation des Fahrers optimal reduziert. In einer zweiten (langen) Phase 311 wird die in der ersten Phase 301 ermittelte Panelkonfiguration angewendet, um fortlaufend eine reduzierte Blendsituation des Fahrers zu ermöglichen. Da sich sowohl die Position der blendenden Lichtquelle 110, als auch die Position des Fahrzeugs 120, als auch die Position der Augen des Fahrers relativ zum Fahrzeug 120 kontinuierlich ändern können, werden die beiden Phasen 301, 311 des iterativen Verfahren 300 zyklisch (z.B. alle 100ms) wiederholt, um so die optimale Panelkonfiguration kontinuierlich der neuen Blendsituation anzupassen. Dies ist in Fig. 3 durch die Rückkopplungsschleife zwischen der zweiten Phase 311 und der ersten Phase 301 dargestellt.

Mit anderen Worten, um eine effiziente Abdunkelung zu ermöglichen, werden in Verfahren 300 zwei Phasen in der Funktionalität des Systems 100 definiert, die zyklische mit einer Frequenz von 10 Hz durchlaufen werden. In der ersten Phase 301 des 100ms dauernden Zyklus wird anhand unterschiedlicher Patterns eine geeignete Zielstelle der Abdunkelung gesucht. In der zweiten Phase 311 wird die identifizierte Stelle des Panels 102 bis zum Ende des aktuellen Zyklus (also bis zum Ende der 100ms) auf den angestrebten Transparenzgrad abgedunkelt, um die Sicht des Fahrers konkret zu schützen. Zwischen diesen Phasen kann eine Vollbildaufnahme erfolgen (Bezugszeichen 305), während das Panel 102 kurzfristig deaktiviert wird (z.B. am Tag für eine Belichtungszeit von 1 ms). Wie oben erwähnt, kann die Vollbildaufnahme zur Ermittlung des Vorliegens einer Blendsituation (zur Erkennung der Blendwirkung) (Bezugszeichen 312) und/oder zur Bestimmung der Position der Augen (und zur Extraktion der Augenposition (ROI) im Bild) (Bezugszeichen 313) verwendet werden. Die dazu erforderliche Verarbeitung kann während der zweiten Phase 311 erfolgen, so dass keine Verzögerungen bei der Bestimmung einer geeigneten Panelkonfiguration (für welche der ROI typischerweise verwendet wird) erfolgt.

In der ersten Phase 301 werden mit Hilfe unterschiedlicher Strategien und auf Basis der Hochgeschwindigkeits-Bildanalyse die Bereiche des Panels identifiziert, die zu einer deutlichen Abdunkelung des Augenbereichs des Fahrers führen. Die Suche nach einer geeigneten Panelkonfiguration berücksichtigt typischerweise die verwendete Panelkonfiguration der ein oder mehreren vorrangegangen Zyklen, um so unter der Annahme einer kontinuierlichen Situation, schnell die aktuell geeignete Panelkonfiguration zu bestimmen. Hierzu können z.B. aus der Bildverarbeitung bekannte Motion-Estimation Verfahren verwendet werden, um die Panelkonfiguration den Bewegungen der Lichquellen 110, des Fahrzeugs 120 und/oder des Fahrers kontinuierlich anzupassen. Falls jedoch eine Blendwirkung erstmals auftritt, ohne zu wissen aus welcher Richtung die Lichtquelle 110 kommt, ist die Suchen nach einer passenden Panelkonfiguration typischerweise aufwendiger, da keine geeigneten Panelkonfigurationen aus der Vergangenheit verwendet werden können.

Eine Blendsituation am Tag, bei der typischerweise eine einzige Quelle (z. B. die Sonne) das Blenden verursacht, ist zu unterscheiden von der Blendsituation bei Fahrten in der Nacht, bei der häufig mehrere Lichtquellen gleichzeitig blenden können. Folglich kann es vorteilhaft sein, je nach Situation eine angepasste Suchstrategie zur Ermittlung der geeigneten Panelkonfiguration zu verwenden.

Nach einer sequentiellen Methode können alle 48 Zellen 201 nach der Reihe abgedunkelt werden und es kann geprüft werden, ob Auswirkungen im Bereich der Augen vorhanden sind. Bei einer rein sequenziellen Suche bei 1.000 Hz wird eine Zelle 201 pro Millisekunde abgedunkelt. In diesem Fall würde die Suchphase 48ms dauern, was bedeutet, dass nur für ca. 50 % der gesamten Zykluszeit eine effektive Abdunkelung (in der zweiten Phase 311) erfolgt, da der Rest der Zykluszeit für die Suche einer geeigneten Panelkonfiguration (in der ersten Phase 301) verwendet wird. Da eine "Nicht-Abdunkelung" des Panels 102 für 48ms in der ersten Phase 301 vom Fahrer wahrgenommen werden könnte, sollte die Suchzeit nach einer geeigneten Panelkonfiguration auf maximal 10-15 % der Zykluszeit (d. h. 15ms oder 15 Suchschritte bei einer Suchfrequenz von 1000Hz) reduziert werden, so dass die iterativen Abdunkelungen während der Suchphase 301 vom Fahrer nicht wahrgenommen werden.

Unter der Annahme, dass die Sonne (oder eine einzige Lichtquelle 110) den Fahrer blendet (Situation am Tag) und nur ein Bereich (umfassend ein oder mehrere der 48 Zellen 201) des Panels 102 abgedunkelt werden sollen, könnte folgendes die Zeilen-Spalten Suchverfahren verwendet werden. Bei der Zeilen-Spalten-Suche werden zuerst die kompletten (sechs) Zeilen und dann die kompletten (acht) Spalten des Panels 102 abgedunkelt und für jede Zeile / Spalte die Schattenbildung in dem ROI ermittelt. Wird für eine bestimmte Zeile und für eine bestimmte Spalte eine Schattenbildung in dem ROI bestimmt, so ergibt sich die abzudunkelnde Zelle 201 durch die Kombination der Zeilennummer und der Spaltennummer. Mit diesem Verfahren sind 14 Suchschritte (d.h. eine Zeit von 14ms bei 1000Hz) erforderlich.

Allgemein kann durch dieses Verfahren die Suchzeit um einen Faktor (N+M)/N*M gesenkt werden (bei einem Panel 102 mit N Zeilen und M Spalten).

Als weiteres Suchverfahren kann das "Divide et Impera" Verfahren verwendet werden. Bei diesem Verfahren wird der Suchbereich jeweils in zwei Hälften aufgeteilt. Die beiden Hälften des Suchbereiches werden nacheinander abgedunkelt, und es wird geprüft, in welcher der beiden Hälften der gewünschte Schatten 111 auf den ROI geworfen wird. Diese Hälfte stellt dann den neuen Suchbereich dar und das Verfahren fährt mit einer erneuten Iteration (auf Basis des neuen Suchbereichs) fort. Somit wird der Suchbereich in mehreren Iterationen jeweils um die Hälfte reduziert, so dass bei einem NxM Panel 102 in $\sqrt{NM}$ Schritten eine abzudunkelnde Zelle 201 identifiziert werden kann. Bei jeder Iteration wird die Hälfte des Suchbereichs als neuer Suchbereich festgelegt, welcher einen Schatten 111 auf dem ROI produziert. Die Identifikation der Sollposition der Abdunkelung nimmt folglich ca. 5-6 Iterationsschritte in Anspruch (bei einem Panel mit 48 Zellen), d. h. es werden 10-12 Aufnahmen des ROI benötigt, was bei 1000Hz in einer Zeit von max. 12ms erfolgen kann.

Die Suchzeit kann i.A. weiter reduziert werden, wenn auf ein oder mehrere Panelkonfigurationen aus vorangegangenen Zyklen zurückgegriffen werden kann, d.h. wenn bereits zuvor identifizierte Panelkonfigurationen bei der Suche berücksichtigt werden. Dies wird weiter unten näher erläutert.

In den o.g. Beispielen wurde von einer Zykluszeit von 100ms und einer Bildrate von 1000Hz ausgegangen. Um den Anteil der ersten Phase 301 (d.h. der Suchphase) am Gesamtzyklus zu reduzieren, könnte es von Vorteil sein, die Zykluszeit zu vergrößern, d.h. die Hauptzyklusfrequenz zu reduzieren (z.B. von 10Hz auf 8Hz, so dass sich eine Zykluszeit von 125ms ergibt). Dadurch kann bei einer Suchzeit von 10ms, der Anteil der Suchphase am Gesamtzyklus auf 8% reduziert werden.

Die o.g. Suchverfahren können für die Suche nach mehreren Lichtquellen angepasst werden. Dies kann insbesondere bei Nachtfahrten erforderlich sein, da nachts mehrere Objekte (z.B. mehrere entgegenkommende Fahrzeuge) den Fahrer blenden können. Darüberhinaus besteht bei Nachtbetrieb die zusätzliche Herausforderung, dass (wie oben erläutert) die Aufnahmefrequenz typischerweise niedriger ist als bei guten Belichtungsverhältnissen bei Tag.

Ein Verfahren zur Suche einer geeigneten Panelkonfiguration umfasst z.B. die Suche eines horizontalen Abdunkelungsstreifens, der eine deutliche Verdunkelung des Augenbereichs (ROI) verursacht. Dazu werden nach und nach alle Streifen (Zeilen) des Panels 102 abgedunkelt, um die Panelzeile(n) zu ermitteln, die zu einem Schatten 111 auf dem ROI führen. Es ist zu erwarten, dass sich bei gewöhnlichen Fahrten, die möglichen Blendquellen 110 in der gleichen horizontalen Ebene befinden, und somit nur eine Zeile ermittelt wird. Das Verfahren ist aber auch in der Lage, Lichtquellen 110 in unterschiedlichen Höhen zu ermitteln und zu "blockieren", indem mehrere Zeilen ermittelt werden. Nach der ersten vertikalen Suche, werden somit ein oder mehrere Streifen zu Abblendung ermittelt. Innerhalb dieser Streifen (Zeilen) erfolgt dann (optional) eine horizontale Suche durch Generierung eines mobilen Schattens in der Breite des Augenabstandes. D.h. innerhalb jeder Zeile werden Gruppen von Zellen 201 gebildet, wobei eine Zellengruppe einen Abdunklungsbereich bildet, der vom durchschnittlichen Augenabstand eines Fahrers abhängt (z.B. eine Gruppe von zwei angrenzenden Zellen 201). Die Suche nach der geeigneten Zellengruppe innerhalb einer Zeile kann durch einen Scan innerhalb der Zeile (z. B. von links nach rechts) erfolgen. Im Normalfall (d. h. bei Lichtquellen in einer einzigen Höhe) kann eine geeignete Panelkonfiguration mit ca. 14 Bildaufnahmen ermittelt werden.

Wie bereits oben erwähnt können die Panelkonfigurationen aus vorhergehenden Zyklen für die Suche nach einer aktuellen Panelkonfiguration verwendet werden. Z.B. kann die Suche der aktuellen Panelkonfigurationen (d.h. der aktuellen Abdunkelungsbereiche) in der unmittelbaren Nachbarschaft der bereits im vorherigen Zyklus detektierten Abdunkelungsbereiche durchführt werden. Zur Ermittlung der aktuellen Abdunkelungsbereiche können auch die zyklisch ermittelten Referenzaufnahmen (Vollbild, ohne Abdunkelung) verwendet werden. Dadurch können erkannten Licht-/Schattenbewegungen erkannt werden, und Bewegungsparameter ermittelt werden, die bei der Suche nach Abdunkelungsbereichen berücksichtigt werden. Jeder ermittelte Abdunkelungsbereich kann in jedem Zyklus mit der korrespondierenden Referenzaufnahme verglichen werden. Neben Bewegungsinformationen kann so auch ermittelt werden, ob eine bestimmte Lichtquelle noch vorhanden ist. Ergibt z.B. der Vergleich zwischen der Aufnahme mit Abdunkelung und der Referenzaufnahme keinen Unterschied, kann die bestimmte Lichtquelle als "nicht mehr vorhanden" klassifiziert werden. In einem beispielhaften Verfahren, kann durch Berücksichtigung der Referenzaufnahme die Suche auf 2 % der Zykluszeit am Tag und auf 5-8 % der Zykluszeit bei Nacht reduziert werden kann.

Wie bereits dargelegt, ist in jedem Zyklus in möglichst kurzer Zeit eine aktuelle Panelkonfiguration zu ermitteln. Für Lichtquellen 110, die bereits in einem vorherigen Zyklus vorhanden waren, können die korrespondierenden Abdunkelungsbereiche aus den vorherigen Zyklen herangezogen werden.

Insbesondere können relative Bewegungstendenzen der Lichtquellen ermittelt werden. Hierzu kann die 3D-Winkelgeschwindigkeit der einzelnen Lichtquellen ermittelt werden. Außerdem können die Richtungen der Lichtquellen relativ zur Augenposition zu ermittelt. Dabei werden auf Basis der Geometrie des Panels 102, der Kameraposition 101 und der Position der Augen (ROI) die zwei Winkel (horizontal und vertikal) jeder Lichtquelle 110 in Bezug auf die Hauptachse (Frontallinie) des Fahrzeugs berechnet.

Durch Analyse einer Sequenz von Abdunkelungsbereichen, einer Sequenz von zugehörigen Schattenaufnahmen und/oder einer Sequenz von Referenzaufnahmen für eine Sequenz von Zyklen kann eine Bewegung des Schattens 111 auf dem Gesicht des Fahrers ermittelt werden, woraus sich eine Bewegung der korrespondierenden Lichtquelle 110 ergibt. Diese Bewegung des Schattens kann durch die Erkennung der Lichtvariation innerhalb der Aufnahmen durchgeführt werden (z. B. wenn im Bereich eines Auges die Helligkeit ansteigt). Die ermittelte Bewegung des Schattens 111 kann durch Anpassung/Erweiterung der abgedunkelten Zellen 201 des Panels 102 kompensiert werden, so dass der Abdunkelungsbereich der Bewegung der Lichtquelle 110 nachgeführt wird. D.h. nach der Erkennung der Bewegungsrichtung der Lichtquellen 110 kann die Position der abzudunkelnden Bereiche prädiziert werden (z.B. anhand eines Kalman-Estimators). Dabei kann eine vereinfachte, dreidimensionale Abbildung des Innenraums des Fahrzeugs gemacht werden, indem das abdunkelbare Panel 102 und die Kamera 101 kalibriert werden. Durch die Ermittlung der Augenpositionen wird die Transformation zwischen Augenposition und Panel geschätzt. Durch Prädiktion der Abdunkelungsbereiche kann die Suche nach optimalen Abdunkelungsbereichen für die bereits vorhandene Lichtquelle 110 übersprungen werden, was zu einer deutlichen Reduzierung der Suchzeit in der ersten Phase 301 führt.

Ein weiterer Aspekt des Systems 100 ist die dynamische Anpassung der Lichtdurchlässigkeit der abgedunkelten Bereiche 201 des Panels 102. Mit anderen Worten, das System 100 ist in der Lage, Lichtquellen 110 mit unterschiedlich hoher Blendwirkung unterschiedlich stark abzudunkeln. Dafür ist neben der Zuordnung der Lichtquelle 110 zu einer Position des Schattens 111 auf der erfassten Referenzaufnahme auch eine Schätzung der Helligkeit der jeweiligen Lichtquelle 110 erforderlich. Durch korrekte Schätzung der Helligkeit einer Lichtquelle 110 kann die Intensität der Abdunkelung dynamisch ermittelt werden.

Bei der Realisierung dieser Funktion werden typischerweise mehrere Faktoren berücksichtigt. Zum einen wird die aktuelle Belichtungszeit der Kamera 101 berücksichtigt, wobei die Belichtungszeit die Helligkeit der Augen-ROI bestimmt. Wie bereits dargelegt, kann die Belichtungszeit anhand einer Lookuptabelle (z.B. auf Basis der Helligkeit der Umgebung) ermittelt und auf die Kamera angewendet werden. Eine zweite Einflussgröße ist die Stärke der Abdunkelung durch das Panel 102. Außerdem ist bei mehreren Lichtquellen 110 möglicherweise eine Überlappung der Schattenprojektionen der mehrerer Lichtquellen 110 zu berücksichtigen, um eine korrekte Intensitätszuweisung zu den Lichtquellen 110 durchzuführen.

In ähnlicher Weise wie bei der Bewegungsprädiktion bei der Berechnung der Position zur Abdunkelung der einzelnen Lichtquellen 110, können auch die Intensitäten der einzelnen Lichtquellen 110 nachverfolgt werden. Anhand einer Anzahl unabhängiger, parallel laufender Regelkreise werden die Intensitäten der jeweiligen Lichtquellen bzw. die Intensitäten der jeweiligen Abdunkelungen nachverfolgt, um die optimale optische Filterung der äußeren Lichtquellen zu realisieren.

Die ermittelten Intensitäten der Abdunkelungen werden an die Steuereinheit des Panels 102 geschickt (neben den Positionsdaten), um so den Grad der Abdunkelung der einzelnen Zellen 201 zu steuern.

Neben der zyklischen Bestimmung der Abdunkelungsbereiche des Panels 102 in der ersten Phase 301 des Verfahrens 300, umfasst das Verfahren 300 noch weitere Verfahrensschritte, um eine Blendwirkung von äußeren Lichtquellen 110 zu reduzieren. Insbesondere sollte das System 100 befähigt sein, eine Verblendung des Fahrers zu erkennen (sowohl bei Tag als auch bei Nacht). Ein Verfahren 312 zur Erkennung der Verblendung kann in einem ersten Schritt die Ermittlung der mittleren Umgebungsbelichtung aufweisen. Auf Basis der vorhandenen Bildinformationen - durch die Auswertung des Vollbildes - wird die Gesamthelligkeit der Szene, sowie die Verteilung des Lichtes auf dem Bild ermittelt. Die Helligkeit der Bildes hängt typischerweise von der Belichtungszeit des Bildes ab. Folglich, ergibt sich die tatsächliche Helligkeit der Szene / Umgebung als eine Funktion der aus dem Bild ermittelten Helligkeit und der Belichtungszeit des Bildes. Diese Funktion kann durch empirische Messungen ermittelt werden. Andererseits könnte der optische Sensor 101 eine Auto-Exposure-Funktion (d.h. eine automatische Berechnung der Belichtungszeit) aufweisen, welche gewährleistet, dass durch eine Anpassung der Belichtungszeit an die aktuellen Lichtverhältnisse, die tatsächliche Helligkeit der Szene / Umgebung direkt durch Auswertung der Bildhelligkeit ermittelt werden kann.

In einem zweiten Schritt wird die Helligkeit im Gesichtsbereich gemessen. Dazu wird der Bildbereich, der das Gesicht des Fahrers beinhaltet, aus den Bilddaten extrahiert um die Helligkeit bzw. die Verteilung der Beleuchtung in diesem Bereich zu ermitteln. Die Gesichtserkennung kann z.B. mittels einer angepassten Version des Bayes Classifiers (d. h. die Erkennung des Vorhandenseins eines Gesichts, ohne Klassifizierung, welche Person abgebildet wird) erfolgen, wie z.B. in "Computer Vision with the OpenCV Library", Gary Bradski, Adrian Kaehler, O'Reilly 2008, ISBN 978-0-596-51613-0 dargelegt.

Wie in Fig. 3 gezeigt, erfolgt die Erkennung 312 einer Verblendung zyklisch (z.B. in der zweiten Phase 311 auf Basis des in Verfahrensschritt 305 ermittelten Vollbildes). Unter der Annahme, dass der Fahrer während der Fahrt seinen Kopf nicht zu extrem bewegt, kann bei einer Suche im aktuellen Vollbild die bereits im vorherigen Zyklus erkannte Gesichtsposition als Startwert übernommen werden. Desweiteren können Bewegungsschätzungs-Verfahren verwendet werden, um aus einer Reihe von vorherigen Vollbildern die aktuelle Position des Gesichtes zu ermitteln, welche dann als Startwert für die Erkennung des Gesichts genommen werden kann.

Bei der Berechnung einer absoluten Lichthelligkeit im Gesichtsbereich werden üblicherweise neben der Helligkeit des Bildbereiches ebenfalls die aktuelle Belichtungszeit der Kamera und die Helligkeit der Hintergrundelemente des Fahrzeuginnenraums verwendet.

Durch die Untersuchung der Relation zwischen der tatsächlichen Helligkeit der Szene / Umgebung und der Helligkeit des Gesichtsbereichs, kann die Blendwirkung des Fahrers ermittelt werden. Die Detektion einer Blendsituation in Abhängigkeit der ermittelten Werte (Helligkeit der Szene / Umgebung, Helligkeit des Gesichtsbereichs) kann durch einen empirisch ermittelten Klassifikator (anhand von Probanden) gewährleistet werden. Der Output dieses Klassifikators bestimmt, ob das Verfahren 300 zu Abdunkelung einzelner Zellen 201 aktiviert wird oder nicht. Aufgrund der unterschiedlichen Blendsituationen bei Tag und bei Nacht, ist es vorteilhaft spezifische Klassifikatoren für den Betrieb am Tag und den Betrieb bei Nacht zu bestimmen. Außerdem können unterschiedliche Klassifikatoren mit unterschiedlichen Sensitivitätsgraden bestimmt werden (z. B. Aktivierung bei niedriger/mittlerer/höherer Blendwirkung).

Ein weiteres Verfahren 313 ist auf die Extraktion der Augen-ROI gerichtet. Wie bereits oben dargelegt, wird typischerweise in der ersten Phase 301 des Verfahrens 300 die Bilderfassung durch den optischen Sensor 101 auf den Augen-ROI beschränkt, um so höhere Bildraten zu ermöglichen. Der Augen-ROI kann z.B. aus der in Verfahrensschritte 305 ermittelten Referenzaufnahme (d.h. dem Vollbild) bestimmt werden. Nach der Erkennung des Gesichtes (siehe Verfahren 312) werden mittels Bildverarbeitungsmethoden die Zentren der Augen ermittelt. Dabei kann man ein Referenzmuster zur Erkennung der Augenposition im Bild verwenden. Das Referenzmuster kann vom Fahrer abhängen, d.h. die Erkennung der Augenposition kann an den jeweiligen Fahrer angepasst werden. Außerdem wird bei der Ermittlung der Augenposition der Fall berücksichtigt, dass der Fahrer eine (Sonnen-)Brille trägt. Sollte die Erkennung der Augenposition ohne Erfolg durchgeführt worden sein, wird in dem eingegrenzten Bildbereich des Gesichts anhand geeigneter Mustererkennungsverfahren die Position der Brille ermittelt. Alternativ zur automatischen Erkennung eines Brillenträgers, kann das System 100 befähigt sein, einen Parameter aufzunehmen, aus dem hervorgeht, ob der Fahrer ein Brillenträger ist oder nicht. Das Ergebnis des Verfahrens 313 ist eine Fläche im Kamerabild (z.B. eine viereckige Fläche), die die Projektion der Augen des Fahrers beinhaltet und die als ROI für die Bilderfassung in der ersten Phase 301 verwendet wird.

Die in Fig. 3 dargestellten Verfahren werden auf der Berechnungseinheit 104 ausgeführt. Die Berechnungseinheit 104 kann z.B. als ein embedded PC, digitaler Signalprozessor oder FPGA-Modul (field-programmable gate array) implementiert werden.

In diesem Dokument werden Systeme und Verfahren zur Reduzierung der Blendwirkung von Lichtquellen in Fahrzeugen beschrieben. Die beschriebenen Systeme umfassen ein selektiv abdunkelbares Panel, sowie einen auf den Fahrer gerichteten optischen Sensor. Sie können mit geringem Aufwand in das Fahrzeug eingebaut werden und sind praktisch selbstjustierend. Durch iterative Rückkopplungsverfahren unter synchronisierter Verwendung des Panels und des optischen Sensors können Schatten auf die Augen des Fahrers geworfen werden, welche eine Vielzahl von blendenden Lichtquellen abdunkeln. Dabei werden nur selektiv Bereiche auf dem Panel abgedunkelt, um den restlichen Sichtbereich des Fahrers nicht zu beinträchtigen. Die iterativen Verfahren sorgen für eine kontinuierliche Nachführung der Abdunkelungsbereiche an die Bewegungen der Lichtquellen, des Fahrzeugs und/oder des Fahrers.

Es ist zu beachten, dass die Beschreibung und die Figuren lediglich die Prinzipien der vorgeschlagenen Verfahren und Vorrichtungen darlegen. Auf Basis der vorliegenden Offenbarung ist es dem Fachmann möglich, diverse Varianten der beschriebenen Verfahren und Vorrichtungen zu erstellen. Diese Varianten, obwohl nicht ausdrücklich beschrieben, werden ebenfalls von diesem Dokument offenbart und werden von den Ansprüchen umfasst.

**Patentansprüche**

1. Eine Vorrichtung (100) zur Reduzierung der Blendwirkung einer Lichtquelle (110) auf den Augen eines Führers eines Fahrzeugs (120), wobei die Vorrichtung (100) umfasst:

    - ein abdunkelbares Panel (102), welches eine Vielzahl von einzeln abdunkelbaren Zellen (201) umfasst und welches zwischen einer Position für den Fahrzeugführer und der Lichtquelle (110) angeordnet werden kann;
    - einen optischen Sensor (101), der eingerichtet ist, ein Bild der Augen des Fahrzeugführers zu erfassen; und
    - eine Berechnungseinheit (104), welche ausgebildet ist,

        - eine oder mehrere Zellen (201) aus der Vielzahl von abdunkelbaren Zellen (201) des abdunkelbaren Panels (102) abzudunkeln;
        - anhand des optischen Sensors (101) ein Bild der Augen des Fahrzeugführers zu erfassen; und
        - auf Basis des Bildes zu ermitteln, ob aufgrund des abgedunkelten Panels (102) ein Schatten auf die Augen des Fahrzeugführers geworfen wird.

2. Die Vorrichtung (100) nach Anspruch 1, wobei die Berechnungseinheit (104) ausgebildet ist, eine oder mehrere Schatten-Zellen (201) aus der Vielzahl von Zellen (201) zu ermitteln, die dazu führen, dass bei Abdunkelung der ein oder mehreren Schatten-Zellen (201) bei Beleuchtung durch die Lichtquelle (110) ein Schatten (111) auf die Augen des Fahrzeugführers geworfen wird.

3. Ein Verfahren (300) zur Reduzierung der Blendwirkung einer Lichtquelle (110) auf die Augen eines Führers eines Fahrzeugs (120), wobei das Verfahren (300) umfasst:

    - Abdunkeln eines Bereichs eines abdunkelbaren Panels (102), welches zwischen den Augen des Fahrzeugführers und der Lichtquelle (110) positioniert ist;
    - Erfassen eines Bildes des Fahrzeugführers; und
    - Ermitteln, auf Basis des Bildes, ob aufgrund des abgedunkelten Panels (102) ein Schatten auf die Augen des Fahrzeugführers geworfen wird.

4. Das Verfahren (300) nach Anspruch 3, wobei

    - das abdunkelbare Panel (102) eine Zellenmatrix mit einer Vielzahl von separat abdunkelbaren Zellen (201) umfasst; und
    - das Abdunkeln des abdunkelbaren Panels (102) das Abdunkeln ein oder mehrerer Zellen (201) der Vielzahl von Zellen (201) umfasst.

5. Das Verfahren (300) nach Anspruch 4, weiter umfassend

    - in einer Suchphase (301), Bestimmen von ein oder mehreren Schatten-Zellen (201) der Vielzahl von Zellen (201) durch deren Abdunkelung ein Schatten (111) von der Lichtquelle (101) auf die Augen des Fahrzeugführers geworfen wird, wobei das Bestimmen das Iterieren der Schritte Abdunkeln, Erfassen und Ermitteln für verschiedene Zellen (201) des Panels (102) umfasst.

6. Das Verfahren nach Anspruch 5, wobei

    - in einer Iteration ein Unterbereich von mehreren Zellen (201) des Panels (102) abgedunkelt wird;
    - der Unterbereich von dem Bestimmen von ein oder mehreren Schatten-Zellen (201) ausgeschlossen wird, wenn ermittelt wird, dass kein Schatten (111) auf die Augen des Fahrzeugführers geworfen wird; und
    - das Bestimmen von ein oder mehreren Schatten-Zellen (201) auf den Unterbereich beschränkt wird, wenn ermittelt wird, dass ein Schatten (111) auf die Augen des Fahrzeugführers geworfen wird.

7. Das Verfahren (300) nach irgendeinem der Ansprüche 5 bis 6, umfassend

- in einer Abdunkelungsphase (311), Abdunkeln der ein oder mehreren Schatten-Zellen (201) zur Reduzierung der Blendwirkung der Lichtquelle (110) auf die Augen des Fahrzeugführers; und
- zyklisches Wiederholen der Suchphase (301) und der Abdunkelungsphase (311).

8. Das Verfahren (300) nach Anspruch 7, wobei aus den ein oder mehreren Schatten-Zellen (201) aus den ein oder mehreren vorhergehenden Zyklen die ein oder mehreren Schatten-Zellen (201) für den bestimmten Zyklus prädiziert werden.

9. Das Verfahren (300) nach irgendeinem der Ansprüche 3 bis 8, wobei das Verfahren (300) umfasst

- Ermitteln (305) einer Gesamtaufnahme, welche das Gesicht des Fahrzeugführers und eine Umgebung des Fahrzeugführers umfasst; wobei die Gesamtaufnahme mit abgeschaltetem Panel (102) ermittelt wird; und
- Bestimmen eines Bereichs des Gesichts des Fahrzeugführers;
- Bestimmen einer Gesamthelligkeit aus der Helligkeit der Gesamtaufnahme;
- Bestimmen einer Gesichtshelligkeit aus der Helligkeit der Gesamtaufnahme im Bereich des Gesichts; und
- Detektieren einer Blendung des Fahrzeugführers durch die Lichtquelle (110) auf Basis der Gesichtshelligkeit und der Gesamthelligkeit.

10. Das Verfahren (300) nach Anspruch 9, umfassend: Bestimmen (313) eines Bereichs der Augen des Fahrzeugführers; wobei das Erfassen des Bildes des Fahrzeugführers auf den Bereich der Augen beschränkt ist.

**Claims**

1. A device (100) to reduce the glare effect of a light source (110) to the eyes of a driver of a vehicle, the device (100) comprising:

- a dimmable panel (102) comprising a plurality of individually dimmable cells (201) and which is arrangeable between a position for the vehicle driver and the light source (110);
- an optical sensor (101) configured to capture an image of the eyes of the vehicle driver; and

- a calculation unit (104) which is configured to

- dim one or more cells (201) of the plurality of dimmable cells (201) of the dimmable panel (102);
- capture a picture of the eyes of the vehicle driver by means of the optical sensor (101); and
- determine, based on the picture, if due to the dimmed panel (102) a shadow is being cast upon the eyes of the vehicle driver.

2. The device (100) according to claim 1, wherein the calculation unit (104) is configured to determine one or more shadow cells (201) of the plurality of cells (201), which cause a shadow (111) to be cast upon the eyes of the driver during illumination by the light source (110) upon dimming of the one or more shadow cells (201).

3. A method (300) for reducing the glare effect of a light source (110) to the eyes of a vehicle driver, the method (300) comprising:

- dimming of an area of a dimmable panel (102) which is positioned between the eyes of the vehicle driver and the light source (110);
- capturing a picture of the vehicle driver; and
- determining, based on the picture, if due to the dimmed panel (102) a shadow is being cast upon the eyes of the vehicle driver.

4. The method (300) according to claim 3, wherein

- the dimmable panel (102) comprises a cell matrix with a plurality of separately dimmable cells (201); and
- the dimming of the dimmable panel (102) comprises the dimming of one or more cells (201) of the plurality of cells (201).

5. The method (300) according to claim 4, further comprising

- in a search phase (301), determining of one or more shadow cells (201) of the plurality of cells (201), which, upon dimming therof, cause a shadow (111) to be cast by the light source (101) upon the eyes of the vehicle driver, wherein the determining comprises the iteration of the steps of dimming, capturing and determining for different cells (201) of the panel (102).

6. The method according to claim 5, wherein

- a sub area of multiple cells (201) of the panel (102) is dimmed in one iteration;
- the sub area is excluded from the determination of one or more shadow cells (102), when it is determined that no shadow (111) is being cast upon the eyes of the vehicle driver; and
- the determining of one or more shadow cells (201) is limited to the sub area, when it is determined that a shadow (111) is being cast upon the eyes of the vehicle driver.

7. The method (300) according to any one of the claims 5 to 6 comprising

- dimming, in a dimming phase (311), of the one or more shadow cells (201) for reducing the glare effect of the light source (110) to the eyes of the vehicle driver; and
- cyclic repetition of the search phase (301) and the dimming phase (311).

8. The method (300) according to claim 7, wherein from the one or more shadow cells (201) of the one or more previous cycles, the one or more shadow cells (201) for the specific cycle are predicted.

9. The method (300) according to at least one of the claims 3 to 8, wherein the method (300) comprises

- determining (305) of a total intake, which comprises the face of the vehicle driver and an environment of the vehicle driver; wherein the total intake is determined with the panel (102) being turned off; and
- determining an area of the face of the vehicle driver;
- determining an overall brightness from the brightness of the total intake;
- determining a face brightness from the brightness of the total intake in the facial area; and
- detecting a glare of the vehicle driver by the light source (110) based on the face brightness and the overall brightness.

10. The method (300) according to claim 9, comprising: determining (313) a region of the eyes of the vehicle driver; wherein capturing the image of the vehicle driver is limited the eye region.

**Revendications**

1. Un dispositif (100) pour réduire l'effet d'éblouissement d'une source de lumière (110) sur les yeux d'un conducteur d'un véhicule (120), le dispositif (100) comprenant :

- un panneau d'obscurcissement (102), qui comprend un grand nombre de cellules (201) pouvant être obscurcies individuellement, et qui peut être agencé entre une position prévue pour le conducteur de véhicule et la source de lumière (110) ;
- un capteur optique (101), qui est configuré pour relever une image des yeux du conducteur de véhicule ; et
- une unité de calcul (104), qui est conçue pour

- obscurcir une ou plusieurs cellules (201) dudit grand nombre de cellules (201) pouvant être obscurcies du panneau d'obscurcissement (102) ;
- relever, à l'aide du capteur optique (101), une image des yeux du conducteur de véhicule ; et
- déterminer, sur la base de l'image, si en raison du panneau (102) obscurci, une ombre est portée sur les yeux du conducteur de véhicule.

2. Le dispositif (100) selon la revendication 1, dans lequel l'unité de calcul (104) est conçue pour déterminer une ou plusieurs cellules d'ombrage (201) dudit grand nombre de cellules (201), qui conduisent à ce que, lors de l'obscurcissement desdites une ou plusieurs cellules d'ombrage (201) en cas d'éclairement par la source de lumière (110), une ombre (111) est portée sur les yeux du conducteur de véhicule.

3. Un procédé (300) pour réduire l'effet d'éblouissement d'une source de lumière (110) sur les yeux d'un conducteur d'un véhicule (120), le procédé (300) consistant à :

- obscurcir une zone d'un panneau d'obscurcissement (102), qui est positionné entre les yeux du conducteur de véhicule et la source de lumière (110) ;
- relever une image du conducteur de véhicule ; et
- déterminer, sur la base de l'image, si en raison du panneau obscurci (102), une ombre est portée sur les yeux du conducteur de véhicule.

4. Le procédé (300) selon la revendication 3, d'après lequel

- le panneau d'obscurcissement (102) comprend une matrice de cellules avec un grand nombre de cellules (201) pouvant être obscurcies séparément ; et
- l'obscurcissement du panneau d'obscurcissement (102) comprend l'obscurcissement d'une ou de plusieurs cellules (201) dudit grand nombre de cellules (201).

5. Le procédé (300) selon la revendication 5, consistant en outre à

- déterminer, dans une phase de recherche (301), une ou plusieurs cellules d'ombrage (201) dudit grand nombre de cellules (201), par l'obscurcissement desquelles une ombre (111) est portée par la source de lumière (101) sur les yeux du conducteur de véhicule, la détermination comprenant l'itération des étapes d'obscurcissement, de relevé et de détermination pour différentes cellules (201) du panneau (102).

6. Le procédé selon la revendication 5, d'après lequel

- au cours d'une itération, on obscurcit une zone inférieure de plusieurs cellules (201) du panneau (102) ;
- on exclut la zone inférieure de la détermination d'une ou de plusieurs cellules d'ombrage (201), lorsqu'on détermine qu'aucune ombre (111) n'est portée sur les yeux du conducteur de véhicule ; et
- la détermination d'une ou de plusieurs cellules d'ombrage (201) est limitée à la zone inférieure, lorsqu'on détermine qu'une ombre (111) est portée sur les yeux du conducteur de véhicule.

7. Le procédé (300) selon l'une quelconque des revendications 5 à 6, comprenant

- dans une phase d'obscurcissement (311), l'obscurcissement de ladite une ou des plusieurs cellules d'ombrage (201) pour réduire l'effet d'éblouissement de la source de lumière (110) sur les yeux du conducteur de véhicule ; et
- la répétition cyclique de la phase de recherche (301) et de la phase d'obscurcissement (311).

8. Le procédé (300) selon la revendication 7, d'après lequel à partir de ladite une ou des plusieurs cellules d'ombrage (201) dudit un ou des plusieurs cycles précédents, on prédit ladite une ou les plusieurs cellules d'ombrage (201) pour le cycle déterminé considéré.

9. Le procédé (300) selon l'une quelconque des revendications 3 à 8, le procédé (300) comprenant

- l'élaboration (305) d'une vue d'ensemble, qui comprend le visage du conducteur de véhicule et un environnement du conducteur de véhicule ; la vue d'ensemble étant élaborée avec un panneau (102) à l'arrêt ; et
- la détermination d'une région du visage du conducteur de véhicule ;
- la détermination d'une luminosité d'ensemble à partir de la luminosité de la vue d'ensemble ;
- la détermination d'une luminosité de visage à partir de la luminosité de la vue d'ensemble dans la région du visage ; et

- la détection d'un éblouissement du conducteur de véhicule par la source de lumière (110), sur la base de la luminosité du visage et de la luminosité d'ensemble.

10. Le procédé (300) selon la revendication 9, comprenant la détermination (313) d'une région des yeux du conducteur de véhicule, le relevé de l'image du conducteur de véhicule étant limité à la région des yeux.

Fig. 1

Fig. 2

EP 2 583 847 B1

300

| | Panel | Kamera |
|---|---|---|
| **(Phase 1)** Suche der optimalen Abdunkelung | *Unterschiedliche Muster werden schnell getestet (1000 Hz)* | *Aufnahme Sequenz vom Augen-ROI* |
| | *Ausgeschaltet* | *Aufnahme 1xVollbild* |
| **(Phase 2)** Effektive Abdunkelung | *Die in (1) ermittelte Stelle(n) werden abgedunkelt gehalten.* | *Erkennung Verblendung*  312 *Extraktion Augen-ROI*  313 |

0 ms

301

t₁

(x) ms

(x+exp) ms

311

t₂

305

100 ms

**Fig. 3**

16

**IN DER BESCHREIBUNG AUFGEFÜHRTE DOKUMENTE**

**In der Beschreibung aufgeführte Patentdokumente**

- WO 9962732 A